# EUROPEAN PATENT SPECIFICATION

(11) **EP 3 567 396 B1**
(45) Date of publication and mention of the grant of the patent: **02.02.2022**
(21) Application number: 19170723.1
(22) Date of filing: 24.04.2019
(51) Int. Cl.: G01S 7/00, G01S 17/931, G01S 17/02, G01S 15/93, G01S 17/86, G01S 7/497

(54) **WORK VEHICLE**
NUTZFAHRZEUG
VÉHICULE DE TRAVAIL

(30) Priority: 26.04.2018 JP 2018085569
(43) Date of publication of application: 13.11.2019
(73) Proprietor: Kubota Corporation, Osaka-shi, Osaka 556-8601 (JP)
(72) Inventor: Matsuzaki, Yushi, Sakai-city, Osaka 5900823 (JP)
(74) Representative: Müller-Boré & Partner Patentanwälte PartG mbB

(56) References cited:
- EP-A1- 3 352 037
- EP-A1- 3 352 040
- JP-A- H08 184 675
- JP-A- H09 269 829

## Description

### BACKGROUND OF THE INVENTION

### (1) Field of the Invention

The present invention relates to a work vehicle.

### (2) Description of Related Art

A tractor according to JP 2018-014554 A includes, as obstruction detection sensors, four laser radars each having a scan range exceeding an angle of 90° to detect obstructions present within an entire periphery area around a vehicle body. An obstruction detection processing part configured to process signals from the laser radars calculates a width in a horizontal direction of an obstruction being detected and a distance from the vehicle body to output obstruction detection information. Based on the obstruction detection information, a travel controller causes the vehicle body to decelerate or stop, or executes a steering maneuver to avoid the obstruction. Further, JP 2018-014554 A proposes one that includes an obstruction detection sensor configured to use an ultrasonic beam.

Laser beams used in the laser radars can advance straight ahead to detect an obstruction at a remote position. However, laser beams can be reflected by fog drops, and, under dense mist or rain conditions, fog drops or rain drops may be erroneously detected as obstructions. Therefore, a vehicle according to JP H08-184675 A includes a laser radar type inter-vehicular distance measurement device (laser radar) attached on a front face of the vehicle, an ultrasonic radar type inter-vehicular distance measurement device (ultrasonic sensor) attached on the front face of the vehicle, a mist detection mechanism configured to detect mist in front of the vehicle, and an alarm mechanism provided in a vehicle interior. While the laser radar type inter-vehicular distance measurement device is in operation, when the mist detection mechanism detects mist, operation is switched to the ultrasonic radar type inter-vehicular distance measurement device. When the ultrasonic radar type inter-vehicular distance measurement device measures another vehicle or an obstruction in front of the vehicle, an alarm is issued. That is, under mist conditions, the ultrasonic radar that would be less affected by fog drops or rain drops, for example, compared with the laser radar, is used, instead of the laser radar. In JP H08-184675 A, a measurable distance of the ultrasonic radar is shorter than a measurable distance of the laser radar. Therefore, a detectable distance of the ultrasonic radar is shorter than a detectable distance of the laser radar. However, as a vehicle's travel speed is accordingly suppressed lower under mist or rain conditions, it is regarded that such a dangerous event that the vehicle approaches another vehicle or an obstruction in front of the vehicle can be avoided.

JP H09 269 829 A discloses an operation confirmation device for safety sensor of a vehicle comprising an obstacle sensor.

### SUMMARY OF THE INVENTION

### (1) Problems to be solved

There is a risk that even though the ultrasonic sensor is activated in place of the laser radar and the obstruction is detected, the work vehicle according to JP H08-184675 A cannot avoid an obstruction appropriately when mist or rain that deteriorates performance of obstruction detection by the laser radar occurs when a vehicle speed is not decreased to a speed appropriate for the obstacle detection by the ultrasonic sensor, because the obstruction detectable distance by the ultrasonic sensor is small. Accordingly, a work vehicle which is equipped with a laser radar and an ultrasonic sensor to detect the obstruction and which can securely conduct obstruction collision avoidance regardless of whether the laser radar or the ultrasonic is selected is desired.

### (2) Means for Solving the Problem

The work vehicle according to the present invention includes a vehicle body, a first obstruction detector configured to detect an obstruction based on a radar signal from a laser radar unit, a second obstruction detector configured to detect the obstruction based on a sensor signal from an ultrasonic sensor unit, a measurement environment determiner configured to determine whether a measurement environment around the laser radar unit is normal or abnormal at a level that an erroneous detection may occur due to occurrence of mist, rain, or dust, for example, a vehicle speed manager configured to manage a first vehicle speed allowing, in response to obstruction detection by the first obstruction detector, the vehicle body to stop in front of the obstruction, and a second vehicle speed allowing, in response to obstruction detection by the second obstruction detector, the vehicle body to stop in front of the obstruction, the second vehicle speed being slower than the first vehicle speed, and a travel controller configured to cause, while the vehicle body is caused to travel at the first vehicle speed, when the measurement environment determiner determines that the measurement environment is abnormal, the vehicle body to travel at the second vehicle speed. Note that the first vehicle speed and the second vehicle speed each denote not only a single vehicle speed value, but also a plurality of vehicle speed values or a certain range of vehicle speed values. For example, when the first vehicle speed includes 5 km/h, 5 km/h and 6 km/h, and 5 km/h to 7 km/h, for example, the second vehicle speed includes 2 km/h, 1.5 km/h and 2 km/h, and 1 km/h to 2 km/h, for example.

With the configuration, for example, when the measurement environment determiner determines that a measurement environment around the laser radar unit is abnormal at a level that an erroneous detection may occur due to occurrence of mist, rain, or dust, for example, the travel controller causes the traveling machine body to travel at the second vehicle speed. The second vehicle speed is a vehicle speed allowing the vehicle body to stop, in response to obstruction detection, in front of the obstruction. When a measurement environment around the laser radar unit is normal, the work vehicle travels at the first vehicle speed that is higher than the second vehicle speed. However, when a measurement environment around the laser radar unit is found abnormal, an obstruction collision avoidance control is performed with the ultrasonic sensor unit that can detect only obstructions present at proximal distances, compared with a case where the laser radar unit is used. Therefore, the work vehicle is caused to decelerate to the second vehicle speed appropriate for the obstruction collision avoidance control with the ultrasonic sensor unit. The vehicle body decelerated to the second vehicle speed as described above can stop in front of an obstruction detected by the ultrasonic sensor unit.

When the measurement environment is found abnormal, the laser radar unit would be likely to erroneously detect an obstruction. Therefore, reliability of a result of obstruction detection by the first obstruction detector lowers. By lowering sensitivity of the laser radar unit, a result of obstruction detection by the first obstruction detector and a result of obstruction detection by the second obstruction detector can be combined and used. However, it is preferable that the first obstruction detector be caused to temporarily stop obstruction detection. Therefore, in a preferable embodiment of the present invention, when the measurement environment determiner determines that the measurement environment is abnormal, the first obstruction detector is caused to stop obstruction detection.

The work vehicle can perform various work-related traveling in various work fields depending on a work device to be installed. In particular, in cultivating tasks in agricultural fields where many dust (earth dust) is present, the dust may sometimes cause a measurement environment around the laser radar unit to be found abnormal. Therefore, in a preferable embodiment of the present invention, the measurement environment determiner determines, based on a detection signal from the dust detector configured to detect dust, whether the measurement environment is normal. The dust detector may be configured to use a laser beam or an ultrasonic beam. Therefore, the first obstruction detector or the second obstruction detector can have a dust detection function.

During ploughing and irrigating in a paddy field, splashing water droplets may sometimes cause a measurement environment around the laser radar unit to be found abnormal. Obviously, with a work vehicle that performs work-related traveling outdoors, weather conditions, such as fog drops, rain drops, or snowflakes, may sometimes unavoidably cause a measurement environment around the laser radar unit to be found abnormal. Therefore, in a preferable embodiment of the present invention, the measurement environment determiner determines, based on a detection signal from a rain drop detector configured to detect rain drops, whether the measurement environment is normal. Obviously, the measurement environment determiner can determine, based on a detection signal from either of a fog drop detector configured to detect fog drops and a detector configured to detect snowflakes, whether the measurement environment is normal. A rain drop detector, a fog drop detector, and a snowflake detector can be each configured to use a laser beam or an ultrasonic beam. The first obstruction detector or the second obstruction detector can have such a detection function.

In a case of a manned work vehicle, its driver can know, and, in a case of an unmanned work vehicle, its supervisor can know such an event that a measurement environment is found abnormal, described above. Therefore, such information that the measurement environment is found abnormal can be provided to a control system of the work vehicle. Therefore, in a preferable embodiment of the present invention, the measurement environment determiner determines, based on an operation signal from a manual operation tool operated manually, that the measurement environment is abnormal.

Image processing technology can be used to determine a change in measurement environment around the laser radar unit from captured images of an area around a work vehicle. Therefore, a preferable embodiment of the present invention includes an image processing part configured to output, from a captured image of a measurement environment around the laser radar unit, evaluation data regarding the measurement environment, and the measurement environment determiner determines, based on the evaluation data, whether the measurement environment is normal.

### BRIEF DESCRIPTION OF THE DRAWINGS

Fig. 1 is a side view of a tractor representing an example of a work vehicle provided with obstruction sensors.
Fig. 2 is a schematic plan view of the tractor, illustrating the obstruction sensors provided to the tractor.
Fig. 3 is a functional block diagram illustrating a control system of the tractor.
Fig. 4 is flowcharts illustrating obstruction collision avoidance travel processing and measurement environment determination processing.

### DETAILED DESCRIPTION OF PREFERRED EMBODIMENTS

As can be seen in such a vehicle according to JP H08-184675 A, in a situation where an ultrasonic radar is operated instead of a laser radar under mist or rain conditions where obstruction detection capability of the laser radar lowers, and the vehicle is not decelerated to a vehicle speed appropriate for obstruction detection by the ultrasonic radar, as an obstruction detectable distance by the ultrasonic radar is short, even when the ultrasonic radar detects an obstruction, the vehicle would not be able to appropriately avoid the obstruction. Therefore, such a work vehicle has been demanded that, even when, in the vehicle provided with a laser radar and an ultrasonic sensor for obstruction detection, either of the laser radar and the ultrasonic sensor is selected, obstruction collision avoidance is securely possible.

Next, a work vehicle having an obstruction collision avoidance function, according to an embodiment of the present invention will now be described herein with reference to the accompanying drawings. In the embodiment, the work vehicle is a tractor capable of automatically traveling in an agricultural field (work field) and of performing tasks.

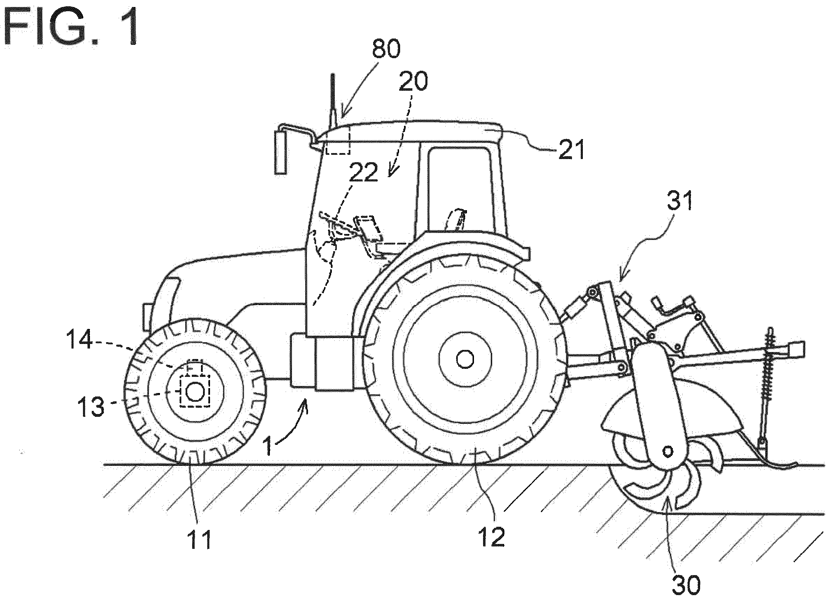

As illustrated in Fig. 1, the tractor is provided with an operation part 20 at a center part of a vehicle body 1 supported by front wheels 11 and rear wheels 12. At a rear part of the vehicle body 1, a work device 30 that is a rotary cultivator is provided via a hydraulic type lift mechanism 31. The front wheels 11 function as steering control wheels. Changing its steering angle changes a travel direction of the tractor. The steering angle of the front wheels 11 is changed through an operation of a steering mechanism 13. The steering mechanism 13 includes a steering motor 14 for automatic steering. For manual traveling, the front wheels 11 are steered through an operation of a steering wheel 22 disposed on the operation part 20. In a cabin 21 of the tractor, a satellite positioning module 80 configured to serve as a global navigation satellite system (GNSS) module is provided. As a component of the satellite positioning module 80, a satellite antenna configured to receive GNSS signals (including global positioning system (GPS) signals) is attached in a ceiling area of the cabin 21. To complement satellite navigation, the satellite positioning module 80 may be combined with an inertial navigation module including a gyro acceleration sensor and a magnetic direction sensor. Obviously, the inertial navigation module may be provided at another location than the satellite positioning module 80.

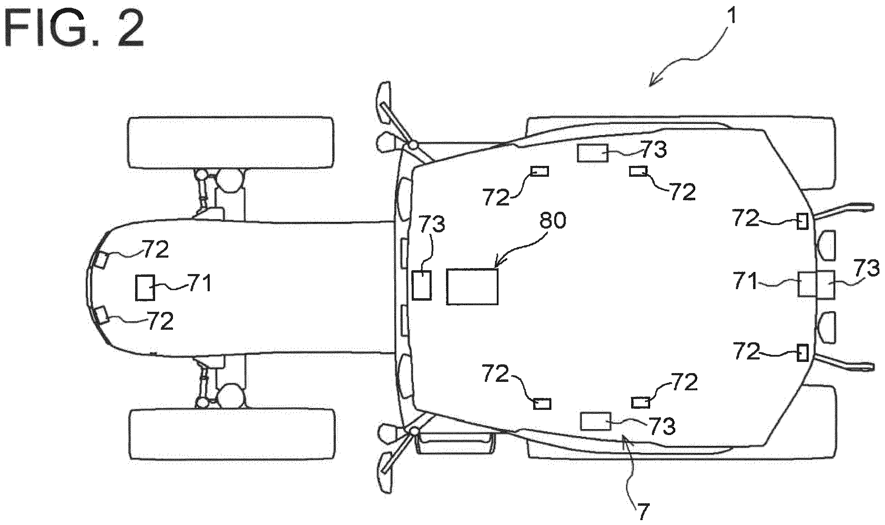

As schematically illustrated in Fig. 2, the vehicle body 1 of the tractor is provided with obstruction sensors 7 each configured to detect an obstruction that may prevent the tractor from traveling. The obstruction sensors 7 include laser radar units 71 also collectively referred to as Light Detection and Ranging (LIDAR), ultrasonic sensor units 72 also referred to as sonars, and cameras 73. Laser radars should be widely interpreted, and include other radars such as millimeter wave radars, for example. The ultrasonic sensor units 72 include one or more ultrasonic sensors. The laser radar units 71 include one or more laser radars. In the embodiment, the laser radar units 71 being provided are two in total, one on a front part and one on the rear part of the vehicle body 1. Therefore, obstructions proximal and distal to the vehicle body 1 in a forward direction and a backward direction are detected. The ultrasonic sensor units 72 being provided are eight in total, two on the front part, two on the rear part, two on a left part, and two on a right part of the vehicle body 1. Therefore, proximal obstructions in a substantially entire periphery area around the vehicle body 1 are detected. The cameras 73 being provided are four in total, one on the front part, one on the rear part, one on the left part, and one on the right part of the vehicle body 1. Therefore, images of an entire periphery area of the vehicle body 1 are captured. Images captured by and output from the four cameras 73 are used as monitoring images with no change, or are used as an overlooking image obtained after the images have undergone viewpoint conversion processing. Images captured by and output from the cameras 73 can be used to detect a measurement environment around the laser radar units 71, such as weather conditions including rain, mist, and snow, for example, and ground conditions including dust, for example.

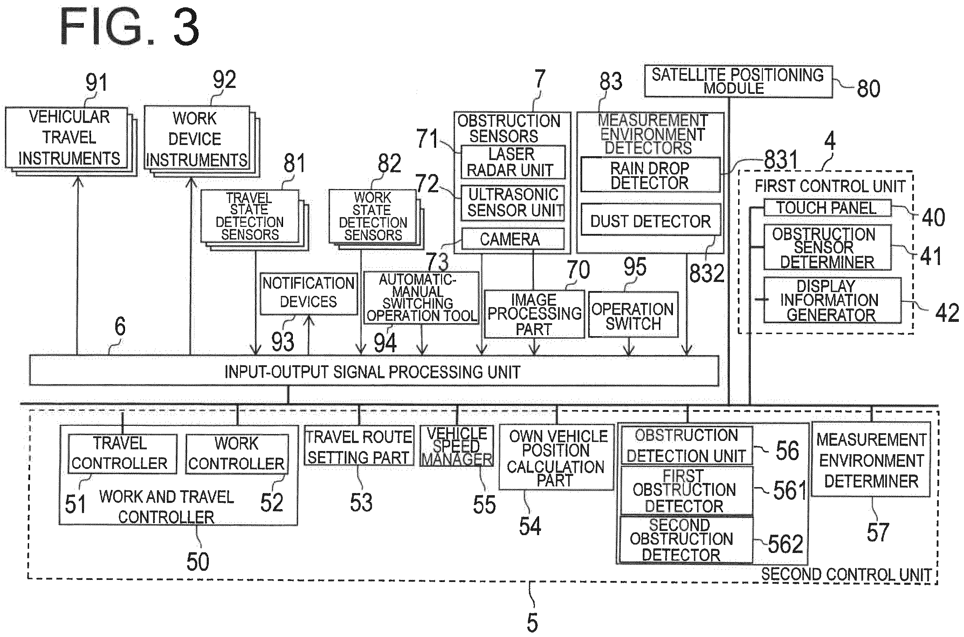

Fig. 3 illustrates a control system provided in the tractor. The control system according to the embodiment includes a first control unit 4 including a general-purpose terminal, a second control unit 5 including on-vehicle electronic control units (ECUs), and an input-output signal processing unit 6. The first control unit 4 has functions of generating a travel route for automatic traveling, of managing control instructions to be provided by a driver to the second control unit 5, of managing automatic traveling, and of exchanging data with a cloud system provided at a remote location, for example. In addition to function parts configured to execute ordinary work-related traveling, the second control unit 5 further includes a function part configured to use a result of detections by the obstruction sensors 7 to execute obstruction collision avoidance. The input-output signal processing unit 6 includes a function part configured to process input-output signals to be handled while the tractor performs work-related traveling. The first control unit 4, the second control unit 5, and the input-output signal processing unit 6 are coupled with each other via an on-vehicle local area network (LAN). The satellite positioning module 80 is also coupled to the on-vehicle LAN. As the first control unit 4 includes a general-purpose terminal such as a tablet computer, the first control unit 4 can be brought outside of the tractor and can be coupled in a wireless manner to the on-vehicle LAN via the input-output signal processing unit 6.

The input-output signal processing unit 6 is coupled with the obstruction sensors 7 described above. In Fig. 3, the cameras 73 are coupled to an image processing part 70. The image processing part 70 is configured to perform processing of generating a monitoring image from images captured by and obtained from the cameras 73, as well as to perform processing of generating data indicative of a measurement environment from the images being captured, for example. A result of processing by the image processing part 70 is entered into the input-output signal processing unit 6. The image processing part 70 may be provided in the input-output signal processing unit 6, or may be provided in each of the cameras 73. Furthermore, the image processing part 70 may be provided in the second control unit 5 or the general-purpose terminal serving as the first control unit 4.

The input-output signal processing unit 6 is further coupled with vehicular travel instruments 91, work device instruments 92, notification devices 93, an automatic-manual switching operation tool 94, travel state detection sensors 81, work state detection sensors 82, and measurement environment detectors 83. The vehicular travel instruments 91 include control instruments associated with the steering motor 14 (see Fig. 1), and a transmission mechanism and an engine unit controlled when the vehicle travels, for example. The work device instruments 92 include control instruments used to drive the work device 30 and the lift mechanism 31 (see Fig. 1). The notification devices 93 include a display, a speaker, lamps, and a buzzer, for example, configured to notify, to a driver or a supervisor, vehicle speed, engine speed, and remaining fuel amount, for example, as well as to notify cautions on work-related traveling. The automatic-manual switching operation tool 94 is a switch used to select either of an automatic traveling mode at which the vehicle travels under automatic steering and a manual traveling mode at which the vehicle travels under manual steering. For example, when the automatic-manual switching operation tool 94 is operated while the vehicle is traveling in the automatic traveling mode, the mode is switched and the vehicle travels under manual steering. When the automatic-manual switching operation tool 94 is operated while the vehicle is traveling under manual steering, the mode is switched and the vehicle travels under automatic steering. In the embodiment, an operation switch 95 is further provided as a manual operation tool to use how a human, such as a driver or a supervisor, recognizes a measurement environment, and, when the driver or the supervisor recognizes that the measurement environment is negatively changed, to provide an operation signal indicative of how the measurement environment is negatively changed to the control system of the tractor. The operation switch 95 is also coupled to the input-output signal processing unit 6. The operation switch 95 may be provided as a software switch in the first control unit 4.

The travel state detection sensors 81 include sensors configured to detect a travel state including steering angle, engine speed, and shift state, for example. The work state detection sensors 82 include a use-form detection sensor configured to detect a use form, such as orientation, height above ground, and use width, for example, of the work device 30. The measurement environment detectors 83 are generic terms of detectors configured to detect a measurement environment around the laser radar units 71. Fig. 3 illustrates a rain drop detector 831 configured to detect rain drops and a dust detector 832 configured to detect dust (powder dust).

As the input-output signal processing unit 6 includes a communication function part configured to exchange data with an external computer in conformity to a wireless communication standard or a wired communication standard, the control system of the tractor can exchange data with a management computer used in a management center at a remote location, for example, and a computer held by a driver or a supervisor, such as a tablet computer or a smartphone (mobile phone), for example. Such information that affects a measurement environment, such as weather information, can further be obtained from an external server, for example.

The general-purpose terminal serving as the first control unit 4 is a tablet computer including a touch panel 40 configured to function as a graphic user interface. The general-purpose terminal is installed, as applications, with an obstruction sensor determiner 41 configured to perform sensor determination processing configured to determine whether the obstruction sensors 7 are normal or abnormal and a display information generator 42 configured to generate information to be displayed for various purposes, for example.

The touch panel 40 is configured to function as a graphic user interface to notify, in a graphic manner to a driver or a supervisor, information of work-related traveling or information of an obstruction.

The second control unit 5 includes a work and travel controller 50, a travel route setting part 53, an own vehicle position calculation part 54, a vehicle speed manager 55, an obstruction detection processing unit 56, and a measurement environment determiner 57. The travel route setting part 53 is configured to develop in a readable manner in a memory a travel route serving as a target travel route for automatic traveling. A travel route may be generated by the first control unit 4, or may be generated by another computer and downloaded to the second control unit 5 via the input-output signal processing unit 6. Based on positioning data from the satellite positioning module 80 adopted with a GPS, for example, the own vehicle position calculation part 54 calculates a coordinate position of the vehicle body 1 on a map.

The work and travel controller 50 includes a travel controller 51 and a work controller 52. The travel controller 51 includes an automatic traveling control function (automatic traveling mode) and a manual traveling control function (manual traveling mode). When the automatic traveling mode is selected, the travel controller 51 obtains, during automatic traveling, a difference between an own vehicle position from the own vehicle position calculation part 54 and a travel route set by the travel route setting part 53, and calculates a steering instruction and a vehicle speed instruction to reduce the difference. The work controller 52 provides, to the work device instruments 92, required control signals in accordance with the own vehicle position. When the manual traveling mode is selected, the work controller 52 performs manual traveling based on an operation of the steering wheel 22 by a driver. The work controller 52 further controls the work device instruments 92 based on operations of the operation tools.

The obstruction detection processing unit 56 includes a first obstruction detector 561 configured to detect an obstruction based on radar signals from the laser radar units 71, and a second obstruction detector 562 configured to detect the obstruction based on sensor signals from the ultrasonic sensor units 72.

Based on detection signals from the measurement environment detectors 83 including the rain drop detector 831 and the dust detector 832, for example, the measurement environment determiner 57 determines whether a measurement environment around the laser radar units 71 is normal. In a case where the image processing part 70 is provided with an image recognition function configured to recognize rain drops and dust, for example, whether a measurement environment around the laser radar units 71 is normal is determined based on evaluation data regarding the measurement environment and representing an image recognition result output from the image processing part 70. Abnormality in measurement environment around the laser radar units 71 denotes a state of a measurement environment where rain drops, water droplets, or dust, for example, would reflect a laser beam to result in such an erroneous detection as if an obstruction is present.

When a measurement environment around the laser radar units 71 is determined as abnormal, only the ultrasonic sensor units 72 have to each take a role of detecting an obstruction present in front of the vehicle body 1 in a travel direction. However, a detection range of each of the ultrasonic sensor units 72 is regarded as a proximal distance of approximately several meters. Therefore, even when an obstruction is detected, the vehicle body 1 cannot stop in front of the obstruction or cannot avoid the obstruction unless otherwise the tractor has traveled at a low vehicle speed. Therefore, the vehicle speed manager 55 manages a first vehicle speed allowing, in response to obstruction detection by the first obstruction detector 561, the vehicle body 1 to stop in front of the obstruction, and a second vehicle speed allowing, in response to obstruction detection by the second obstruction detector 562, the vehicle body 1 to stop in front of the obstruction. The second vehicle speed is set lower than the first vehicle speed. In the embodiment, for automatic traveling, the first vehicle speed is set to 5 km/h, whereas the second vehicle speed is set to 2 km/h. For manual traveling, the first vehicle speed is set to a vehicle speed at or below an upper limit for a speed appropriate for work-related traveling, whereas the second vehicle speed is set to a vehicle speed at or below 2 km/h as an upper limit.

While the vehicle body 1 is traveling at the first vehicle speed, when the measurement environment determiner 57 determines that a measurement environment is abnormal, the travel controller 51 controls the vehicular travel instruments 91 to allow the vehicle body 1 to travel at the second vehicle speed.

During automatic traveling controlled by the travel controller 51, the obstruction detection processing unit 56 detects an obstruction in front of the vehicle body 1 in a travel direction, and, when a distance between the vehicle body 1 and the obstruction falls within a predetermined range, the vehicle body 1 is caused to decelerate or stop. Generally, an obstruction in front of the vehicle body 1 in a travel direction is detected by one of the laser radar units 71. However, in a state where a measurement environment is determined as abnormal, as described above, one of the ultrasonic sensor units 72 detects an obstruction, instead of the laser radar units 71. As an obstruction detection distance of each of the ultrasonic sensor units 72 is short, when one of the ultrasonic sensor units 72 detects an obstruction, the tractor immediately decelerates or stops.

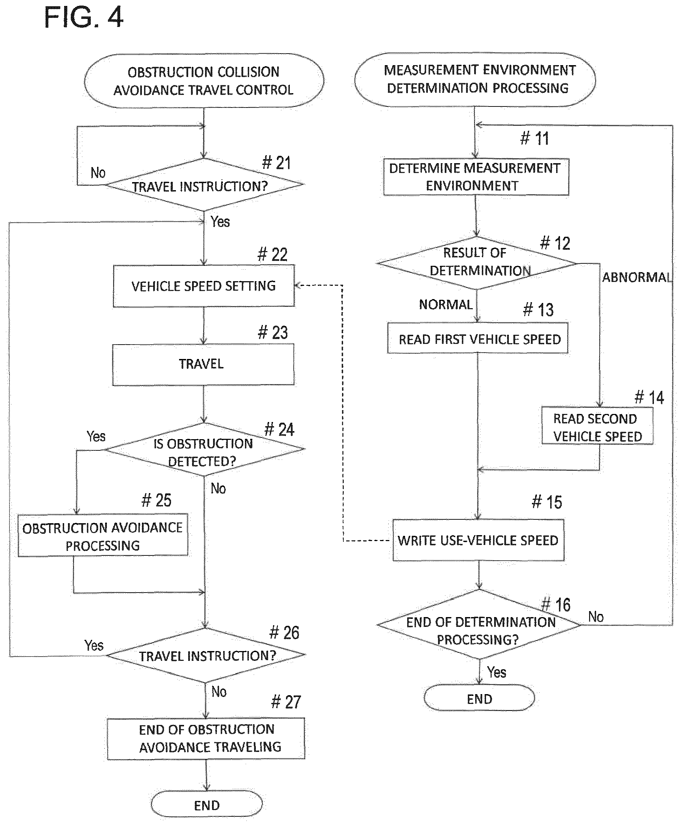

Next, with reference to the flowcharts in Fig. 4, obstruction collision avoidance travel processing and measurement environment determination processing to be executed simultaneously with the travel processing will be described herein. In the embodiment, when the tractor is started, an obstruction collision avoidance travel control and the measurement environment determination processing also start.

In the measurement environment determination processing, the measurement environment determiner 57 first determines a measurement environment (#11). When a result of determination by the measurement environment determiner 57 is "normal", and the laser radar units 71 are able to perform obstruction detection (#12 "normal" branch), the first vehicle speed is read from among vehicle speeds managed by the vehicle speed manager 55 (#13). When a result of determination by the measurement environment determiner 57 is "abnormal", and the laser radar units 71 face difficulty in performing obstruction detection (#12 "abnormal" branch), the second vehicle speed that is slower than the first vehicle speed is read from among the vehicle speeds managed by the vehicle speed manager 55 (#14). The read vehicle speed (the first vehicle speed or the second vehicle speed) is written into a use-vehicle-speed memory (#15). When the tractor is keyed off, or when a driver provides an instruction for forcibly stopping the measurement environment determination processing, and an end request for the measurement environment determination processing is issued (#16 Yes branch), the measurement environment determination processing ends. Unless an end request is issued (#16 No branch), the measurement environment determination processing returns to and repeats from step #11.

In the obstruction collision avoidance travel control, whether a travel instruction is issued is first checked (#21), and a standby state continues until a travel instruction is issued (#21 No branch). When a travel instruction is issued (#21 Yes branch), vehicle speed setting takes place (#22). In the vehicle speed setting, the vehicle speed (the first vehicle speed or the second vehicle speed) written into the use-vehicle-speed memory in step #15 of the measurement environment determination processing is read, the read vehicle speed serves as a use-vehicle speed, and traveling starts (#23). Whether an obstruction is detected in front of the vehicle body 1 in an advancing direction is checked (#24). When an obstruction is detected (#24 Yes branch), obstruction avoidance processing is executed (#25). In the obstruction avoidance processing, the vehicle body 1 decelerates or stops, and a warning of occurrence of the obstruction is notified. Furthermore, when the obstruction is an animal or a human, and the obstruction moves away from in front of the vehicle body 1 in the advancing direction, the obstruction avoidance processing ends, and the vehicle body 1 can return to normal traveling. When the obstruction is a fixed object, and the vehicle body 1 travels to avoid the obstruction, the obstruction avoidance processing ends, and the vehicle body 1 can return to normal traveling.

When the obstruction avoidance processing ends, or no obstruction is detected during checking in step #24 (#24 No branch), whether the travel instruction is still valid is checked (#26). When the travel instruction is still valid (#26 Yes branch), obstruction collision avoidance traveling returns to and continues from step #22. When the travel instruction is cancelled (#26 No branch), the obstruction collision avoidance traveling ends (#27).

### [Another Embodiment]

(1) In the embodiment described above, the laser radar units 71 include two laser radars respectively disposed on the front part and the rear part of the vehicle body 1, and the ultrasonic sensor units 72 include eight ultrasonic sensors respectively disposed on the front part, the rear part, the left part, and the right part of the vehicle body 1. The disposition described above is merely an example. At least a laser radar and an ultrasonic sensor may be disposed on the vehicle body 1 in an advancing direction.
(2) In the embodiment described above, the first control unit 4 that is a general-purpose terminal is fixed to the tractor. However, the first control unit 4 may be a portable terminal that can be brought outside of the tractor. At least one of the own vehicle position calculation part 54, the vehicle speed manager 55, the obstruction detection processing unit 56, and the measurement environment determiner 57 may be installed in the first control unit 4 as an application to be executed by the first control unit 4.
(3) In the embodiment described above, the rain drop detector 831 and the dust detector 832 are illustrated as the measurement environment detectors 83. However, other detectors such as a mist detector and a grass detector, for example, may be used. Furthermore, the measurement environment detectors 83 may form a measurement environment unit including an imaging device and an image recognition device. Such a measurement environment unit may share the cameras 73 for peripheral monitoring and the image processing part 70. Only an image recognition device may otherwise be a special device.
(4) In the embodiment described above, the tractor equipped with the cultivator is illustrated as the work vehicle. However, the present invention is applicable to a tractor equipped with the work device 30 other than a cultivator, and, further, to agricultural vehicles including combine harvesters and rice transplanters, for example, and construction vehicles, for example. Furthermore, the tractor described above can select automatic traveling and manual traveling. However, the present invention is applicable to a tractor in which manual traveling is only available.
(5) How the function parts are divided in the functional block diagram illustrated in Fig. 3 is merely an example for ease of description. Various function parts may be freely integrated, as well as a single function part may be freely separated into a plurality of sub function parts.

The present invention is applicable to a work vehicle provided with a plurality of kinds of obstruction sensors.

## Claims

1. A work vehicle comprising:
a vehicle body (1);
a first obstruction detector (561) configured to detect an obstruction based on a radar signal from a laser radar unit (71) of the vehicle;
a second obstruction detector (562) configured to detect the obstruction based on a sensor signal from an ultrasonic sensor unit (72) of the vehicle;
**characterized by**
a measurement environment determiner (57) configured to determine whether a measurement environment around the laser radar unit (71) is normal or abnormal at a level that an erroneous detection , i.e. a detection as if an obstruction is present, may occur due to occurrence of mist, rain or dust for example;
a vehicle speed manager (55) configured to manage a first vehicle speed allowing, in response to obstruction detection by the first obstruction detector (561), the vehicle body to stop in front of the obstruction, and a second vehicle speed allowing, in response to obstruction detection by the second obstruction detector (562), the vehicle body to stop in front of the obstruction, the second vehicle speed being slower than the first vehicle speed; and
a travel controller (51) configured to cause, while the vehicle body (1) is caused to travel at the first vehicle speed, when the measurement environment determiner (57) determines that the measurement environment is abnormal, the vehicle body (1) to travel at the second vehicle speed.

2. The work vehicle according to claim 1, wherein, when the measurement environment determiner (57) determines that the measurement environment is abnormal, the first obstruction detector (561) is caused to stop obstruction detection.

3. The work vehicle according to claim 1 or 2, wherein the measurement environment determiner (57) determines, based on a detection signal from a dust detector (832) configured to detect dust, whether the measurement environment is normal.

4. The work vehicle according to any one of claims 1 to 3, wherein the measurement environment determiner (57) determines, based on a detection signal from a rain drop detector (831) configured to detect rain drops, whether the measurement environment is normal.

5. The work vehicle according to any one of claims 1 to 4, wherein the measurement environment determiner (57) determines, based on an operation signal from a manual operation tool operated manually, that the measurement environment is abnormal.

6. The work vehicle according to any one of claims 1 to 5, further comprising an image processing part (70) configured to output, from a captured image of the measurement environment around the laser radar unit (71), evaluation data regarding the measurement environment,
wherein the measurement environment determiner (57) determines, based on the evaluation data, whether the measurement environment is normal.

## Patentansprüche

1. Nutzfahrzeug, umfassend:
eine Fahrzeugkarosserie (1);
einen ersten Hindernisdetektor (561), der konfiguriert ist, um basierend auf einem Radarsignal von einer Laserradareinheit (71) des Fahrzeugs ein Hindernis zu detektieren;
einen zweiten Hindernisdetektor (562), der konfiguriert ist, um basierend auf einem Sensorsignal von einer Ultraschallsensoreinheit (72) des Fahrzeugs das Hindernis zu detektieren;
**gekennzeichnet durch**
eine Messumgebungsbestimmungsvorrichtung (57), die konfiguriert ist, um zu bestimmen, ob eine Messumgebung um die Laserradareinheit (71) herum normal oder in einem Maße anomal ist, dass aufgrund des Auftretens von beispielsweise Nebel, Regen oder Staub eine irrtümliche Detektion, d. h. eine Detektion, als ob ein Hindernis vorhanden ist, auftreten kann;
einen Fahrzeuggeschwindigkeitsregler (55), der konfiguriert ist, um eine erste Fahrzeuggeschwindigkeit, die es der Fahrzeugkarosserie erlaubt, als Reaktion auf eine Hindernisdetektion durch den ersten Hindernisdetektor (561) vor dem Hindernis zum Stehen zu kommen, und eine zweite Fahrzeuggeschwindigkeit, die es der Fahrzeugkarosserie erlaubt, in Reaktion auf die Hindernisdetektion durch den zweiten Hindernisdetektor (562) vor dem Hindernis zum Stehen zu kommen, zu regeln, wobei die zweite Fahrzeuggeschwindigkeit langsamer ist als die erste Fahrzeuggeschwindigkeit; und
eine Fahrtsteuerung (51), die konfiguriert ist, um zu bewirken, dass sich, während bewirkt wird, dass sich die Fahrzeugkarosserie (1) mit der ersten Fahrzeuggeschwindigkeit bewegt, die Fahrzeugkarosserie (1) mit der zweiten Fahrzeuggeschwindigkeit bewegt, wenn die
Messumgebungsbestimmungsvorrichtung (57) bestimmt, dass die Messumgebung anomal ist.

2. Nutzfahrzeug nach Anspruch 1, wobei, wenn die
Messumgebungsbestimmungsvorrichtung (57) bestimmt, dass die Messumgebung anomal ist, bewirkt wird, dass der erste Hindernisdetektor (561) die Hindernisdetektion einstellt.

3. Nutzfahrzeug nach Anspruch 1 oder 2, wobei die
Messumgebungsbestimmungsvorrichtung (57) basierend auf einem Detektionssignal von einem Staubdetektor (832), der konfiguriert ist, um Staub zu detektieren, bestimmt, ob die Messumgebung normal ist.

4. Nutzfahrzeug nach einem der Ansprüche 1 bis 3, wobei die Messumgebungsbestimmungsvorrichtung (57) basierend auf einem Detektionssignal von einem Regentropfendetektor (831), der konfiguriert ist, um Regentropfen zu detektieren, bestimmt, ob die Messumgebung normal ist.

5. Nutzfahrzeug nach einem der Ansprüche 1 bis 4, wobei die Messumgebungsbestimmungsvorrichtung (57) basierend auf einem Betätigungssignal von einem manuell betätigten manuellen Betätigungsinstrument bestimmt, dass die Messumgebung anomal ist.

6. Nutzfahrzeug nach einem der Ansprüche 1 bis 5, ferner aufweisend ein Bildverarbeitungsteil (70), das konfiguriert ist, um von einem erfassten Bild der Messumgebung um die Laserradareinheit (71) herum Beurteilungsdaten bezüglich der Messumgebung auszugeben,
wobei die Messumgebungsbestimmungsvorrichtung (57) basierend auf den Beurteilungsdaten bestimmt, ob die Messumgebung normal ist.

## Revendications

1. Engin agricole comprenant :
un corps d'engin (1) ;
un premier détecteur d'obstacle (561) configuré pour détecter un obstacle sur la base d'un signal radar provenant de l'unité de radar laser (71) de l'engin ;
un deuxième détecteur d'obstacle (562) configuré pour détecter l'obstacle sur la base d'un signal de capteur provenant d'une unité de capteur à ultrasons (72) de l'engin ;
**caractérisé par**
un dispositif de détermination d'environnement de mesure (57) configuré pour déterminer si un environnement de mesure autour de l'unité de radar laser (71) est normal ou anormal à un niveau tel qu'une détection erronée, i.e. une détection en présence éventuellement d'un obstacle, pourrait survenir du fait de l'apparition de brouillard, de pluie ou de poussière par exemple ;
un dispositif de gestion de vitesse d'engin (55) configuré pour gérer une première vitesse d'engin permettant, en réponse à la détection de l'obstacle par le premier détecteur d'obstacle (561), au corps d'engin de s'arrêter devant l'obstacle, et une deuxième vitesse d'engin permettant, en réponse à la détection de l'obstacle par le deuxième détecteur d'obstacle (562), au corps d'engin de s'arrêter devant l'obstacle, la deuxième vitesse d'engin étant plus lente que la première vitesse d'engin ; et
un dispositif de contrôle de déplacement (51) configuré pour amener, alors que le corps d'engin (1) est amené à se déplacer à la première vitesse d'engin quand le dispositif de détermination d'environnement de mesure (57) détermine que l'environnement de mesure est anormal, le corps d'engin (1) à se déplacer à la deuxième vitesse d'engin.

2. Engin agricole selon la revendication 1, dans lequel, lorsque le dispositif de détermination d'environnement de mesure (57) détermine que l'environnement de mesure est anormal, le premier détecteur d'obstacle (561) est amené à arrêter la détection d'obstacle.

3. Engin agricole selon la revendication 1 ou 2, dans lequel le dispositif de détermination d'environnement de mesure (57) détermine, sur la base d'un signal de détection provenant d'un détecteur de poussière (832) configuré pour détecter de la poussière, si l'environnement de mesure est normal.

4. Engin agricole selon l'une quelconque des revendications 1 à 3, dans lequel le dispositif de détermination d'environnement de mesure (57) détermine, sur la base d'un signal de détection provenant d'un détecteur de gouttelettes de pluie (831) configuré pour détecter des gouttelettes de pluie, si l'environnement de mesure est normal.

5. Engin agricole selon l'une quelconque des revendications 1 à 4, dans lequel le dispositif de détermination d'environnement de mesure (57) détermine, sur la base d'un signal de fonctionnement provenant d'un outil de fonctionnement manuel fonctionnant manuellement, que l'environnement de mesure est anormal.

6. Engin agricole selon l'une quelconque des revendications 1 à 5, comprenant en outre une partie de traitement d'image (70) configurée pour sortir, depuis une image capturée de l'environnement de mesure autour de l'unité de radar laser (71), des données d'évaluation concernant l'environnement de mesure, dans lequel le dispositif de détermination d'environnement de mesure (57) détermine, sur la base des données d'évaluation, si l'environnement de mesure est normal.
